# EUROPÄISCHE PATENTSCHRIFT

(11) **EP 3 301 309 B1**
(45) Veröffentlichungstag und Bekanntmachung des Hinweises auf die Patenterteilung: **11.11.2020**
(21) Anmeldenummer: 17189311.8
(22) Anmeldetag: 05.09.2017
(51) Int. Cl.: F16B 5/01, F16B 37/04, F16B 37/12

(54) **LEICHTBAUBEFESTIGER**
LIGHTWEIGHT FASTENER
DISPOSITIF DE FIXATION LÉGER

(30) Priorität: 30.09.2016 DE 102016118676
(43) Veröffentlichungstag der Anmeldung: 04.04.2018
(73) Patentinhaber: SFS Intec Holding AG, 9435 Heerbrugg (CH)
(72) Erfinder: COSTABEL, Sascha, 71083 Herrenberg (DE)

(56) Entgegenhaltungen:
- WO-A1-2016/102989
- DE-A1- 19 831 001
- US-A1- 2008 310 931
- US-A1- 2015 152 908

## Beschreibung

Die vorliegende Erfindung befasst sich mit Leichtbaubefestigern, die in der Industrie als Klippmutter, Clip, Käfigmutter oder nach dem englischen Begriff als clip nut bezeichnet werden. Diese finden im Fahrzeugbau und der Flugzeugindustrie Verwendung, um Bauteile sicher und ohne großen Aufwand miteinander zu verbinden.

### HINTERGRUND

Im Fahrzeugbau wie in der Luftfahrtindustrie werden Befestigungselemente z.B. für Verkleidungen eingesetzt, die spezielle Anforderungen erfüllen müssen. Um spanende Verarbeitungsschritte bei der Endmontage zu vermeiden, werden z.B. plattenförmige Elemente vorgebohrt und vor der Endmontage mit Clips bzw. Inserts versehen, die elastische oder mit Spiel angebrachte weitere Verschraubungselemente aufweisen. In diese Verschraubungselemente bzw. Schnapphalterungen greifen bei der Endmontage dann die Verbinder bzw. Befestiger zu anderen Verkleidungselementen bzw. strukturell tragenden Elementen ein. Die plattenförmigen Elemente bzw. Bauteile sind hierbei häufig Leichtbauwandelemente bzw. Sandwichpanels, die aus Gewichtsgründen zumeist aus zwei Aussenlagen (aus Kunststoff oder Aluminium) bestehen, welche mit einer wabenförmigen Aussteifung dazwischen verklebt sind.

### STAND DER TECHNIK

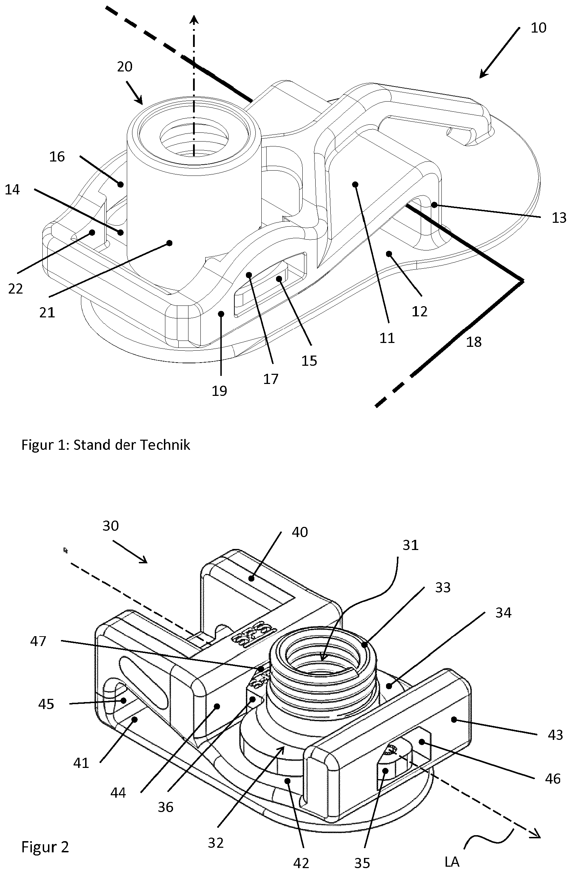

Ein Clip 10 der genannten Art ist in Figur 1 gezeigt. Grundsätzlich weist er die Grundform einer Klammer auf mit einem ersten Schenkel 11 und einem zweiten Schenkel 12 mit einem verbindenden Steg 13. Zur Montage wird der Clip auf eine Platte (nur angedeutet, 18) aufgeschoben, so dass ein Befestigungselement 20 über einer vorbereiteten Öffnung in der Platte (in Figur 1 verdeckt) zu liegen kommt. Dieses Befestigungselement 20 besteht im Wesentlichen aus einer plattenförmigen Basis (in Fig.1 nicht sichtbar) mit zwei Nasen (Vorsprünge 14, 15) und einem Mutternteil 21. Die zwei Vorsprünge 14, 15 werden in je einem Rahmen bzw. von einem die Nasen überspannenden Bügel 16, 17 der Seitenwangen 19, 22 des oberen Clip-Schenkels 11 gehalten. Die Rahmen sind so ausgeführt, dass das Befestigungselement 20 seitliches Spiel hat, aber aus dem Clip nicht herausfallen kann.
Die Befestigungsart, die das Befestigungselement 20 erlaubt, kann in vielen Varianten realisiert werden, zum Beispiel als lösbare oder unlösbare Einrastverbindung mit einer festen oder mehreren Raststufen. Weiterhin kann der zylinderförmige Abschnitt 21 ein Innengewinde aufweisen für eine Schraube. Eine Schraubverbindung hat hierbei den Vorteil der Lösbarkeit und die Möglichkeit der Anzugsmomentkontrolle.

Das Befestigungselement 20 kann je nach Einsatzprofil aus Metall oder Kunststoff gefertigt werden. Wenn hohe Festigkeiten gefordert sind, ist Metall bevorzugt, stellt aber bei der Herstellung eine Herausforderung dar. Als Dreh/Frästeil sind sehr hohe Herstellkosten zu erwarten. In einem Mehrstufen-Umformprozess lässt sich so ein Befestigungselement ebenfalls aus Draht, Bandmaterial oder Blech fertigen, durchläuft dabei aber ebenfalls eine Vielzahl von Arbeitsgängen und muss anschliessend evtl. einer Wärmebehandlung unterworfen werden.

Bei der Verwendung eines Leichtbaubefestigers, bei seiner Montage, wird ein Befestiger - in der Figur 1 von unten - durch eine Aussparung im Schenkel 12, eine in Deckung gebrachte Öffnung in der Platte 18 und eine weitere Öffnung im oberen Schenkel 11 geführt und dort mit dem Befestigungselement 20 verbunden. Damit wird die Platte 18 an einem anderen Element befestigt. Diese Art von Clipbefestigern gibt es in vielen Varianten mit unterschiedlichen Schenkellängen, Formen und für verschiedene Plattenstärken.

Das Dokument WO 2016/102989 A1 zeigt einen Leichtbaubefestiger aus Kunststoff mit einem ersten und zweiten Schenkel und einem diese Schenkel verbindenden Steg. Ein Befestigungselement aus einer Basisplatte und einem Halteteil wird in zwei transversal zum ersten Schenkel angeordneten Wandabschnitten gehalten. Dazu dienen vier an der Basisplatte angebrachte Nasen bzw. Vorsprünge, die in je zwei pro Wandabschnitt angebrachte Öffnungen eingreifen und so für Verdrehsicherheit der Basisplatte sorgen. Das Dokument US 2,937,681 zeigt einen Leichtbaubefestiger nach dem Stand der Technik.

Die Schrift US 4,219,064 zeigt das Grundprinzip eines solchen Befestigers aus Metall, die jüngere US 6,474,917 zeigt eine Ausführung mit Kunststoff-Clip und einem Befestigungselement aus Metall. Beide Schriften fokussieren sich auf eine Anordnung, bei der in den Seitenwangen an der Längsseite des Clips Öffnungen vorgesehen sind. Bei der US 4,219,064 ergibt sich diese Anordnung wegen der Herstellung aus einem plattenförmigen Blechteil, aus dem die Öffnungen seitlich ausgestanzt werden und anschliessend zwei Laschen mit eben diesen Öffnungen um 90° zu Seitenwangen gebogen werden. Dadurch ergibt sich auch eine konstruktive Aussteifung der oberen Schenkels. Die spätere US 6,474,917 übernimmt die Anordnung und formt die Seitenwangen aus Kunststoff mit den entsprechenden Öffnungen. Diese Anordnung hat jedoch auch Nachteile: Durch die Anordnung des Befestigungselementes 20 quer zur Längsausdehnung des oberen Clip-Schenkels definiert das Befestigungselement, bzw. die Ausführung der Vorsprünge 14, 15 die Breite des Clips. Zudem müssen die Rahmen 16, 17 so ausgelegt werden, dass sie die beschriebene Aussteifungswirkung auch erfüllen können, obwohl die Halteöffnungen an einer konstruktiv ungünstigen Stelle in der Seitenwand sind, nämlich exakt auf der Höhe des Clips, an der die Krafteinleitung durch das Befestigungselement erfolgt. Nachdem üblicherweise das Befestigungselement und der Clip getrennt gefertigt und montiert werden (durch Einrasten nach kurzzeitigen Wegdrücken eines der Rahmen) wirkt sich ein stabiler Rahmen negativ auf die Montierbarkeit des Befestigers aus: Je stabiler der Rahmen, desto stabiler der Leichtbaubefestiger an sich - aber umso schwieriger die Herstellung.

### DARSTELLUNG DER ERFINDUNG

Die vorliegende Erfindung hat zum Ziel, die oben genannten Nachteile des Standes der Technik zu verringern und insbesondere ein fertigungstechnisch einfaches Leichtbaubefestigungselement zu beschreiben. In allgemeinster Form beschreibt Anspruch 1 einen solchen Leichtbaubefestiger. Die abhängigen Ansprüche beschreiben nützliche Varianten und Erweiterungen.

Im Grundsatz wird vorgeschlagen, die Anordnung der Rahmen bzw. Käfige 16, 17 um 90° zu drehen so dass die Haltenasen oder Vorsprünge 15, 16 des Befestigungselementes sich parallel zur Längsausdehnung des Schenkels erstrecken.

Im Folgenden soll der Leichtbaubefestiger und seine Bauart im Kontext der Erfindung anhand der Zeichnungen erläutert werden. Dieser Leichtbaubefestiger ist in vielen Varianten einsetzbar. Die Beschreibung unten bezieht sich schwerpunktmässig auf Clips im Flugzeugbau, insbesondere im Innenausbau der Kabine als exemplarisches Anwendungsbeispiel. Das sei aber nicht limitierend verstanden, die Anwendbarkeit eines Leichtbaubefestigers ist nicht darauf beschränkt.

Ein erfindungsgemässer Leichtbaubefestiger 30 bzw. Klippmutter (vgl. Figur 2) besteht im Grundsatz aus zwei Grundelementen, einem Klippkörper 40 und einem verbundenen Befestigungselement 32. Der Klippkörper 40 weist einen ersten Schenkel 41 und einen zweiten Schenkel 42 auf, die einander gegenüberliegend angeordnet und an einem Ende durch einen Steg 45 miteinander verbunden sind. Die Schenkel weisen mit ihrer Innenseite aufeinander zu, die Aussenseiten sind jeweils abgewandt. Die Schenkel 41, 42 sind nicht zwingend parallel, der Aufgabe einer Klammer entsprechend können die Schenkel auch einen spitzen Winkel einschliessen. Die Schenkel 41, 42 definieren in ihrer Erstreckungsrichtung eine Längsachse LA, die auf dem Steg 45 im Wesentlichen senkrecht steht. Das Befestigungselement 32 umfasst eine flächige Basisplatte 34 mit zwei Vorsprüngen bzw. Nasen 35, 36. Mit der Basisplatte verbunden ist ein (bevorzugt zylindrisches) Halteteil 33 mit einer zentralen Öffnung 31, die sich auch durch die Basisplatte 34 erstreckt. Der zweite Schenkel 42 weist auf seiner Aussenseite zwei Rahmen 43, 44 auf mit Durchbrüchen 46, 47. Diese sind dazu vorgesehen die Vorsprünge 35, 36 des Befestigungselementes 32 aufzunehmen. Der Abstand dieser beiden Rahmen zueinander ist so gewählt, dass das Befestigungselement im Klippkörper 40 mit Spiel, aber unverlierbar gehaltert werden kann. Durch das Spiel kann beim Einsetzen eines Befestigers später das Befestigungselement 32 Justagetoleranzen ausgleichen. Im Gegensatz zum Stand der Technik sind die Rahmen nicht an den Längsseiten des zweiten Schenkels angeordnet, sondern quer dazu. Mit anderen Worten, die Rahmen 43, 44 sind im Wesentlichen quer zur Längsachse LA angeordnet. Eine Verbindungslinie durch die beiden Durchbrüche 46, 47 liegt demnach parallel zur Längsachse LA. und auch die Ausrichtung der beiden Nasen 7 Vorsprünge 35, 36 ist entlang der Achse LA orientiert.

Diese Anordnung hat den Vorteil, dass die Breite des Klippkörpers 40 nicht mehr von der Breite der Basisplatte 34 plus der Ausdehnung der Vorsprünge bestimmt wird, sondern sich an der Breite der Basisplatte allein orientieren kann. Damit kann der Klippkörper kompakter und leichter gebaut werden.

Das an der Basisplatte 34 angeordnete Halteteil 33 dient bei der Endmontage dazu, einen Befestiger oder Dorn aufzunehmen. Dazu werden im Bereich der Öffnung 31 Halteelemente vorgesehen. Diese können als Rastelemente ausgeführt sein, so dass ein Dorn mit einem Gegenprofil in die Rastelemente eingreift und gehalten wird. Die Rastelemente können, wie aus dem Stand der Technik bekannt, wieder lösbar oder unlösbar ausgeführt werden. Alternativ kann das Haltelement an der Innenseite der Öffnung 31 Gewindegänge aufweisen, also eine Mutternbauweise darstellen.

Üblicherweise wird das Halteelement 33 in zwei Stücken vorgefertigt; die Basisplatte aus Blech mit der geforderten Stärke bevorzugt ausgestanzt. Die Mutter kann durch Umformen aus einem Drahtstück in an sich bekannter Weise hergestellt werden. Die äussere Form des Halteteils 33 ist zweitrangig, weil die Kraftableitung bzw-. Drehmomentableitung bei der Endmontage via die Vorsprünge 35, 36 erfolgt. Dazu wird häufig das Halteteil 33 mit der Basisplatte 34 durch Schweissen, Kleben oder Einpressen verbunden.

Alternativ kann das Halteteil 33 auch als Drahtmutter 51 ausgeführt werden, wie das die Figuren 2, 3, 7, 8, 9 darstellen. Die Gewindegänge werden hierbei aus einem kantig profilierten Draht aufgebaut und so die Dimensionen die Gewindemassgrössen definiert. Die Drahtlagen werden üblicherweise verschweisst und schaffen somit die strukturelle Festigkeit.

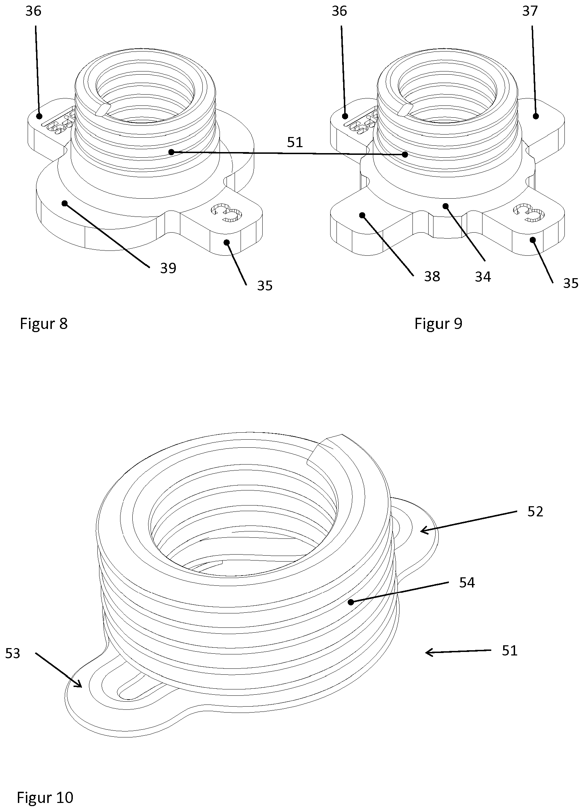

Figur 10 zeigt eine weiterentwickelte Drahtmutter oder Drahtgewindemutter 51. Sie besteht aus einem spiralig aus Draht gewickelten Gewindeteil 54 sowie zwei aus der Drahtspirale heraus integral angeformten, auskragenden Drahtschleifen 52, 53, die unterbrechungsfrei aus dem Draht der Drahtmutter 51 hervorgehen. Diese Schleifen übernehmen die Funktion einer Drehmomentstütze bzw. der Vorsprünge 35, 36. Der Draht wird bevorzugt ein kantiges Querschnittsprofil aufweisen, was in dem spiralig gewickelten Gewindeteil dazu führt, dass Gewindeflanken und Gewindespitzen ausgebildet werden.
Die Anzahl der Schleifen 52, 53 muss nicht auf 2 beschränkt sein. Je nach Anforderung können drei, vier oder mehr solche Schleifen gebildet werden.

In einer Weiterbildung der Erfindung wird der der Steg 45 gelenkig ausgebildet, mit anderen Worten, durch strukturelle bzw. konstruktive Massnahmen so ausgelegt ist, dass der Steg 45 eine Relativbewegung, insbesondere ein Spreizen der Schenkel 41, 42 erlaubt. So lässt sich das Einführen eines plattenförmigen Gegenstandes zwischen die Innenseiten der Schenkel 41, 42 gewährleisten. Dies kann durch Auswahl des Materials des Stegs 45 erzielt werden oder z.B. durch lokales Anpassen der Wandstärke.

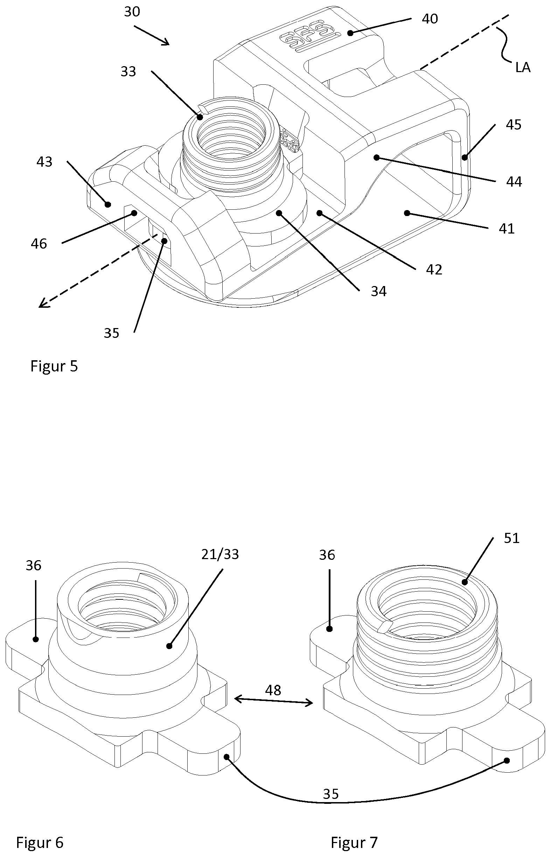

Die Figuren 6 bis 9 zeigen verschieden Varianten von Basisplatten. Die flächige Basisplatte von Figur 6 und 7 ist als Merkmal 48 bezeichnet und zeigt eine im wesentliche eckige, bevorzugt rechteckige oder quadratische Grundform, wobei an zwei gegenüberliegenden Kanten die Vorsprünge bzw. Nasen 35, 36 angebracht sind. Figur 6 zeigt als Halteteil eine Mutter gemäss Stand der Technik, Figur 7 dagegen eine Drahtmutter 51.

Alternativ und besonders bevorzugt zeigt Figur 8 eine flächige Basisplatte 39 mit im Wesentlichen runder, bevorzugt ovaler Grundform, wobei die Vorsprünge bzw. Nasen 35, 36 an einander gegenüberliegenden Stellen der Basisplatte angebracht sind. Diese Bauform weist mehrere Vorteile auf. Zum einen wird durch die runde Form, speziell die ovale Form mit der grossen Halbachse quer zur Verbindungslinie der Vorsprünge 35, 36 eine bessere Kippstabilität erzielt. Ausserdem hat die verrundete Form Vorteile bei der Montage des Leichtbaubefestigers.

Eine Variante, die nicht Teil der Erfindung ist, weist eine flächige Basisplatte 34 mit zwei weiteren Vorsprüngen bzw. Nasen 37, 38 auf, die gegenüber den anderen Vorsprüngen 35, 36 um 90° verdreht angeordnet sind. Diese zusätzlichen Vorsprünge können, müssen aber nicht formidentisch ausgebildet sein zu den Vorsprüngen 35, 36..

In einer Weiterbildung des Leichtbaubefestiger weist die Aussenseite des zweiten Schenkels 42 im Aufnahmebereich der Basisplatte 34 keine in Längsrichtung parallel zur Längsachse LA angeordneten Seitenwände, Rippen oder ähnliche Aussteifungen auf. Dieses fehlen hat Vorteile bei der Montage von Klippkörper 40 und Befestigungselement 20 zum fetigen Clip 30.

Clips, Klippmuttern bzw. Leichtbaubefestiger der beschriebenen Art werden heute weitgehend aus Kunststoff gefertigt, bzw. aus Kunststoff zusammen mit Metalleinsätzen. Je nach Einsatzzweck und Belastung stehen unterschiedliche Kunststoffe zur Verfügung. je nach geforderter Elastizität, Temperatur und Nicht-Entflammbarkeit.

Die vorbeschriebenen Details bzw. Ausführungsformen sind miteinander kombinierbar, soweit technisch möglich und sinnvoll, auch wenn nicht jede Kombination explizit beschrieben wurde.

### BESCHREIBUNG DER FIGUREN

Die Figur 1 bezieht sich auf einen Leichtbaubefestiger nach dem Stand der Technik. Die Merkmale sind bereits oben erläutert.
Figur 2 zeigt einen Leichtbaubefestiger 30 gemäss einer Ausführung der Erfindung; im Wesentlichen aufgebaut aus einem ersten Schenkel 41 und einem zweiten Schenkel 42, verbunden durch einen Steg 45 (hier zweiteilig ausgeführt). Die Ausdehnung der Schenkel senkrecht zum Steg bzw. Stegbereich definiert eine Längsachse LA des Leichtbaubefestigers 30. Der grundsätzliche Aufbau als Klammer oder Clip wird ergänzt durch die Elemente, die auf der Oberseite bzw. Aussenseite von Schenkel 42 das Befestigungselement 32 aufnehmen. Letzteres besteht aus einer Basisplatte 34 mit einem darauf befestigten zylindrischen Halteteil 33, das eine zentrale Durchgangsöffnung 31 aufweist. An der Basisplatte 34 befinden sich in der Grundausführung zwei Nasen oder Vorsprünge 35, 36. Diese greifen in zwei Öffnungen 46, 74 ein, die in quer zu der Längsachse LA angeordneten Rahmen oder Käfigen 43, 44 vorgesehen sind.

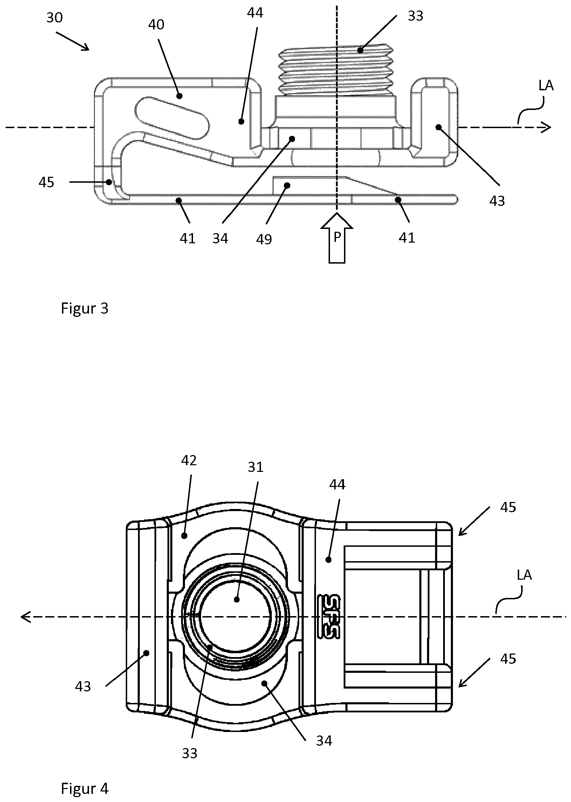

Figur 3 zeigt den Leichtbaubefestiger aus Figur 2 in Seitenansicht. Deutlich zu erkennen ist der Raum zwischen den Schenkeln 41, 42, der Als Aufnahme für ein plattenförmigen Elementes vorgesehen ist. Der Clip 30 wird hierzu auf eine Kante der Platte aufgeschoben, der Steg 45 wird dabei bevorzugt als Anschlag verwendet. Durch den Pfeil P angedeutet wird ein Befestiger (nicht gezeigt) in der Zeichnung von unten durch eine Öffnung im Schenkel 41, ein im plattenförmigen Element vorhandenen Bohrung und durch ein korrespondierendes Loch im Schenkel 42 so eingeschoben, dass er sich mit den Haltelementen des Halteteils 33 verbinden kann. Merkmal 49 ist eine Fixierhilfe für den Clip 30, eine das Loch im Schenkel 41 umgebende, ring- oder kragenförmige Umrandung, die in die Bohrung des plattenförmigen Elementes eingreift und so den Clip bis zur Endmontage fixiert.
Figur 4 zeigt den Leichtbaubefestiger 30 in Draufsicht. Erkennbar wird hier die Durchgangsöffnung 31 im Haltelement 31, die wegen der Halterung der Basisplatte 34 in den Rahmen 43, 44 seitliches Spiel besitzt und somit eine Feinjustage bei der Endmontage erlaubt. Deutlich erkennbar ist auch die Aufführung des gelenkigen Stegs 45 mit 2 Teilabschnitten.
Figur 5 ist erneut eine perspektivische Darstellung einer Variante eines erfindungsgemässen Leichtbaubefestigers 30. Alle Elemente sind funktionell identisch mit der Beschreibung von Figuren 2-4. Die Ausführung des Rahmens bzw. Käfigs 43 ist anders ausgeführt und folgt damit Designvorgaben bzw. Notwendigkeiten, die sich aus der Einbaugeometrie ergeben.
   Die Ausführungsform gemäss Figur 2 und 5 zeigt, dass der Clip 30 an der Aussenseite/Oberseite seines Schenkels 42 im Aufnahmebereich der Basisplatte 34 keine seitlichen, das heisst in Längsrichtung parallel zur Längsachse LA angeordneten Seitenwände oder Aussteifungen aufweist. Dort ist der Clipschenkel 42 folglich auch flexibler, was die Montage des Befestigungselementes 32 auch wesentlich erleichtert. Es hat sich gezeigt, dass eine besondere Aussteifung des oberen Schenkels nicht notwendig ist, weil nach der Endmontage des Clips alle wesentlichen Kräfte vom Befestigungselement 32 normal zur Schenkelfläche ausgeübt werden. Da diese plan auf dem plattenförmigen Element aufliegt, ist eine besondere Versteifung nicht erforderlich.
Die Figuren 6 und 7 zeigen eckige Basisplattenvarianten 48 mit den Vorsprüngen 35, 36. Figur 6 zeigt ein Halteteil 33 ähnlich der Bauart des Standes Technik (Merkmal 21, Figur 1). Figur 7 zeigt eine alternative Drahtmutter 51.
Figur 8 zeigt ein Haltelement 32 mit einer bevorzugten Ausführung einer Basisplatte mit ovaler Grundform. Merkmal 39 weist auf die Ausbuchtungen entlang der grossen Halbachse des Ovals hin.
Figur 9 zeigt eine Variante des von Figur 8, wo die ovalen Ausbuchtungen 39 durch Nasen / Vorsprünge 37, 38 ersetzt wurden.
Figur 10 zeigt eine Drahtmutter 51, die komplett incl. Gewindeteil 54 und Drahtschleifen 52, 35 (funktionell äquivalent zu Vorsprünge 35, 36) aus Profildraht gefertigt wurde. Dies erlaubt es, das Befestigungselement 32 aus einem Stück zu fertigen.

### BEZUGSZEICHENLISTE

- 10: Clip
- 11: erster Schenkel
- 12: zweiter Schenkel
- 13: Steg
- 14, 15: Vorsprünge, Nasen
- 16, 17: Rahmen, Bügel
- 18: Platte
- 19, 22: Seitenwangen
- 20: Befestigungselement
- 21: Mutternteil
- 30: Leichtbaubefestiger, Klippmutter, Clip
- 31: Öffnung, Durchgangsöffnung
- 32: Befestigungselement
- 33: Halteelement, Halteteil
- 34: Basisplatte
- 35, 36: Vorsprung, Nase
- 37, 38: Vorsprung, Nase
- 39: Basisplatte oval
- 40: Klippkörper
- 41: erster Schenkel
- 42: zweiter Schenkel
- 43, 44: Rahmen, Käfig
- 45: Steg
- 46, 47: Durchbruch
- 48: Basisplatte mit eckiger Grundform
- 49: Fixierelement
- 51: Drahtmutter
- 52, 53: Drahtschleife(n)
- 54: Gewindeteil

## Patentansprüche

1. Leichtbaubefestiger bestehend aus einer Klippmutter (30), umfassend
- einen Klippkörper (40), mit
- einem ersten Schenkel (41) und einem zweiten Schenkel (42), die einander gegenüberliegend angeordnet und an einem Ende durch einen Steg (45) miteinander verbunden sind;
- wobei die Erstreckung der Schenkel (41, 42) vom Steg weg eine Längsachse LA definiert, die auf dem Steg im Wesentlichen senkrecht steht;
- und die einander zugewandten Seiten der Schenkel (41, 42) als Innenseiten und die abgewandten Seiten als Aussenseiten gelten sollen,
- ein Befestigungselement (32), umfassend eine flächige Basisplatte (34) mit nur zwei Vorsprüngen bzw. Nasen (35, 36) und einem mit der Basisplatte verbundenen Halteteil (33) mit einer zentralen Öffnung (31), die sich auch durch die Basisplatte (34) erstreckt, wobei der zweite Schenkel (42) auf seiner Aussenseite genau zwei Rahmen (43, 44) aufweist mit Durchbrüchen (46, 47), die die zwei Vorsprünge (35, 36) des Befestigungselementes (32) aufnehmen können und so voneinander beabstandet sind, dass das Befestigungselement im Klippkörper (40) mit Spiel unverlierbar gehaltert werden kann;
- wobei diese Rahmen (43, 44) quer zur Längsachse LA angeordnet sind und somit eine Verbindungslinie durch die beiden Durchbrüche (46, 47) parallel zur Längsachse LA verläuft,
**dadurch gekennzeichnet, dass**
das Halteteil (33) im Bereich der Öffnung (31) Halteelemente aufweist, die als Gewindegänge ausgeführt sind, wobei die Gewindegänge als Drahtmutter (51) aus einem kantig profilierten Draht aufgebaut sind, dessen Dimensionierung die Gewindemassgrössen definiert.

2. Leichtbaubefestiger nach Anspruch 1, **dadurch gekennzeichnet, dass** der Steg (45) gelenkig ausgebildet ist und so das Einführen eines plattenförmigen Gegenstandes zwischen die Innenseiten der Schenkel (41, 42) gewährleistet.

3. Leichtbaubefestiger nach Anspruch 1 - 2, **dadurch gekennzeichnet, dass** die flächige Basisplatte (48) eine im wesentliche eckige, bevorzugt rechteckige oder quadratische Grundform aufweist, wobei an zwei gegenüberliegenden Kanten die Vorsprünge bzw. Nasen (35, 36) angebracht sind.

4. Leichtbaubefestiger nach Anspruch 1 - 2, **dadurch gekennzeichnet, dass** die flächige Basisplatte (49) eine im wesentliche runde, bevorzugt ovale Grundform aufweist, wobei die Vorsprünge bzw. Nasen (35, 36) an einander gegenüberliegenden Stellen der Basisplatte angebracht sind.

5. Leichtbaubefestiger nach Anspruch 1 - 4, **dadurch gekennzeichnet, dass** die Vorsprünge bzw. Nasen (35, 36) als integral an die Drahtmutter (51) angeformte, auskragende Drahtschleifen (52, 53) ausgebildet sind, die unterbrechungsfrei aus dem Draht der Drahtmutter (51) geformt sind.

## Claims

1. A lightweight construction fastener, consisting of a clip nut (30), comprising
- a clip body (40), with
- a first leg (41) and a second leg (42) which are arranged opposite one another and which are connected to one another at one end by a web (45);
- wherein the extent of the legs (41, 42) away from the web defines a longitudinal axis LA which is substantially perpendicular to the web;
- and the sides of the legs (41, 42) which face one another are to be defined as inner sides and the sides facing away from one another are to be defined as outer sides,
- a fastening element (32), comprising a flat base plate (34) with only two protrusions or lugs (35, 36), respectively, and a holding part (33) connected to the base plate and having a central opening (31) which also extends through the base plate (34), wherein the second leg (42), on its outer side, has exactly two frames (43, 44) with apertures (46, 47) which are capable of accommodating the two protrusions (35, 36) of the fastening element (32) and which are spaced apart from one another such that the fastening element can be captively held in the clip body (40) with play;
- wherein these frames (43, 44) are arranged transverse to the longitudinal axis LA and a connecting line thus runs through the two apertures (46, 47) parallel to the longitudinal axis LA,
**characterized in that**
in the area of the opening (31), the holding part (33) includes holding elements which are formed as thread pitches, wherein the thread pitches are constructed as a wire nut (51) made from an angularly profiled wire, the dimensioning of which defines the thread pitch sizes.

2. The lightweight construction fastener according to claim 1, **characterized in that** the web (45) is formed in an articulated manner and thus allows insertion of a plate-shaped object between the inner sides of the legs (41, 42).

3. The lightweight construction fastener according to claims 1 - 2, **characterized in that** the flat base plate (48) has a substantially angular, in particular rectangular or square, basic shape, wherein the protrusions or lugs (35, 36), respectively, are attached at two opposite edges.

4. The lightweight construction fastener according to claims 1 - 2, **characterized in that** the flat base plate (49) has a substantially round, preferably oval basic shape, wherein the protrusions or lugs (35, 36), respectively, are attached at opposite sides of the base plate.

5. The lightweight construction fastener according to claims 1 - 4, **characterized in that** the protrusions or lugs (35, 36), respectively, are designed as projecting wire loops (52, 53) which are integrally formed on the wire nut (51) and which are formed from the wire of the wire nut (51) without interruptions.

## Revendications

1. Fixation pour construction légère composée d'un écrou de fixation à pince (30) comprenant :
- un corps de pince (40), avec
- une première branche (41) et une deuxième branche (42), qui sont disposées opposées l'une à l'autre et reliées entre elles à une extrémité par une nervure (45),
- sachant que l'extension des branches (41, 42) depuis la nervure définit un axe longitudinal LA, qui se trouve pour l'essentiel perpendiculaire sur la nervure,
- et les côtés des branches (41, 42) tournés l'une vers l'autre doivent être considérés comme côtés intérieurs et les côtés opposés comme côtés extérieurs,
- un élément de fixation (32), comprenant une plaque de base plane (34) avec seulement deux saillies ou tétons (35, 36) et une pièce de retenue (33) reliée à la plaque de base avec une ouverture centrale (31), qui s'étend également à travers la plaque de base (34), sachant que la deuxième branche (42) comporte sur son côté extérieur exactement deux cadres (43, 44) avec des passages (46, 47), qui peuvent loger les deux saillies (35, 36) de l'élément de fixation (32) et sont à distance l'un de l'autre de telle sorte que l'élément de fixation peut être maintenu imperdable avec du jeu dans le corps de pince (40),
- sachant que ces cadres (43, 44) sont disposés transversalement à l'axe longitudinal LA et que de ce fait une ligne de liaison passe à travers les deux passages (46, 47) parallèlement à l'axe longitudinal LA,
**caractérisée en ce que**
la pièce de retenue (33) comporte dans la zone de l'ouverture (31) des éléments de maintien, qui sont exécutés comme des filets de filetage, sachant que les filets de filetage sont constitués sous la forme d'un écrou en fil (51) à partir d'un fil à profil polygonal, dont le dimensionnement définit les tailles de la masse filetée.

2. Fixation pour construction légère selon la revendication 1, **caractérisée en ce que** la nervure (45) est constituée articulée et de telle sorte que l'introduction d'un objet en forme de plaque est assurée entre les côtés intérieurs des branches (41, 42).

3. Fixation pour construction légère selon la revendication 1 - 2, **caractérisée en ce que** la plaque de base plane (48) comporte une forme de base pour l'essentiel polygonale, de préférence rectangulaire ou quadratique, sachant que les saillies ou tétons (35, 36) sont disposés sur deux bords opposés.

4. Fixation pour construction légère selon la revendication 1 - 2, **caractérisée en ce que** la plaque de base plane (49) comporte une forme de base pour l'essentiel ronde, de préférence ovale, sachant que les saillies ou tétons (35, 36) sont disposés sur des emplacements de la plaque de base opposés l'un à l'autre.

5. Fixation pour construction légère selon la revendication 1 - 4, **caractérisée en ce que** les saillies ou tétons (35, 36) sont intégralement constitués comme des boucles en fil (52, 53) en saillie, conformées intégralement sur l'écrou en fil (51), qui sont formées sans interruption à partir du fil de l'écrou en fil (51).
